# EUROPEAN PATENT SPECIFICATION

(11) **EP 4 371 163 B1**
(45) Date of publication and mention of the grant of the patent: **02.04.2025**
(21) Application number: 22748355.9
(22) Date of filing: 13.07.2022
(51) Int. Cl.: H01M 4/04, H01M 4/62, H01M 10/0565, H01M 4/139

(54) **BINDER COMPOSITION FOR SECONDARY BATTERIES**
HYBRIDVERBUNDELEKTROLYT MIT FLUORPOLYMER
ÉLECTROLYTE COMPOSITE HYBRIDE COMPRENANT UN FLUOROPOLYMÈRE

(30) Priority: 16.07.2021 EP 21186199
(43) Date of publication of application: 22.05.2024
(73) Proprietor: Solvay Specialty Polymers Italy S.p.A., 20021 Bollate (MI) (IT)
(72) Inventor: LIBERALE, Francesco, 27100 Pavia (PV) (IT); BISO, Maurizio, 20162 Milano (MI) (IT); PIERI, Riccardo Rino, 20122 Milano (MI) (IT); FANTONI, Matteo, 20020 Vanzaghello (MI) (IT); FINSY, Vincent, 1500 Halle (BE)
(74) Representative: Banfi, Gaia
(86) International application number: PCT/EP2022/069558
(87) International publication number: WO 2023/285511

(56) References cited:
- KR-A- 20140 016 155
- US-A1- 2014 213 730
- US-A1- 2016 289 439
- US-A1- 2019 071 564
- US-A1- 2020 266 407

## Description

### Cross-reference to related applications

This application claims priority to European application number 21186199.2 filed on July 16, 2021.

### Technical Field

The present invention relates to binder compositions comprising certain amorphous (per)fluorinated polymer powders having improved solubility in solvents and to the use of the same for preparing components of secondary batteries and solid state batteries.

### Background Art

Lithium ion batteries with liquid electrolytes are currently dominating the market of rechargeable energy storage devices, despite some intrinsic limitations. Among them, severe safety concerns and intrinsic low energy densities for high power applications. Conventional Li-ion battery liquid electrolytes are indeed based on organic carbonates that undergo leakage, generate volatile gaseous species and are flammable.

Solid state batteries (SSBs) promise to be the next generation of energy storage devices as they provide higher energy density, longer cycle life, improved safety and lower costs. In a SSB the highly flammable liquid electrolyte is replaced by a solid electrolyte, removing virtually all risk of ignition and/or explosion. Despite these intrinsic theoretical advantages over conventional batteries, also easy-handling and scalable processing is needed for their successful commercialization.

Among solid electrolytes, composite electrolytes composed of solid ionic (Li⁺) conductor inorganic materials dispersed into a polymeric binder, offer the possibility to combine high ionic conductivity with good mechanical properties.

State of the art composite electrolytes are usually produced through a wet casting method. In this method, the inorganic material powder is dispersed into a solution of a binder in a solvent to form a slurry which is cast on a support and subsequently dried to remove the used solvent.

The use of polymeric binders in solid state batteries is also interesting at cathode side, where active materials, conductive agent and inorganic solid electrolytes (eg. sulfides) are kept together in a continuous matrix thanks to the binder itself.

Among processing routes, both for electrodes and solid electrolytes, tape casting is the one most widely adopted, due to both similarities with conventional battery components processing and to its intrinsic versatility, which allow to finely tune thickness and other processing parameters. With this method slurries are prepared by dispersing inorganic conductor particles into a polymeric solution and casting the obtained dispersion on the desired layer.

The use of specific inorganic materials in composite electrolytes and in electrodes poses limitations in the choice of solvents as well as in that of binders: highly conductive sulfides, in particular, limit the range of available compatible solvents, which should not react with them, not reduce their ionic conductivity and not create by-products that could interfere with battery operation. Binders have to be also compatible with sulfides and soluble or dispersible in available solvents.

Some reports suggest the use of fluorinated binders for sulfide composites. However, the use of commercially adopted crystalline fluorinated binders is limited by solubility issues to few solvents compatible with inorganics.

As an example, US2019/296393 discloses the preparation of solid electrolyte layers for SSB containing a sulfide solid electrolyte, polyvinylidene fluoride (PVdF), ethyl cellulose (EC) and butyl butyrate as solvent.

On the contrary, amorphous fluorinated polymers (e.g. Tecnoflon^{®} FKM) can be solubilized in several compatible solvents. The use of these polymers as binders has however intrinsic drawbacks, which can limit their real application in solid state battery components and pave the path to the development and use of new and alternative products. In particular, amorphous fluorinated polymers are mainly produced in the form of slabs, which have to be cut in small pieces before the dissolution process takes place. This results in time losses and additional processing operational costs, and also problems in obtaining a fine polymeric dispersion in selected compatible solvent.

Some amorphous fluorinated polymers in powder form currently exist on the market, e.g. Tecnoflon^{®} NM powder. Nevertheless, usual additives such as organic antisticking agents present in said powders are not stable at the voltages at which the batteries operate, creating by-products and negatively impacting battery operation.

In document US2010/174011, in particular in sections [0042] to [0047], mention is made of cryogenic grinding as technology for downsizing fluoroelastomer crumbs or pellets; also in this case, the addition of a dusting agent to prevent massing is taught as an essential requirement for obtaining a free-flowing compound. However, said dusting agent is not stable in the voltage range where the battery operates.

US9518178 discloses the addition of thermoplastic vinylidene fluoride polymers in (per)fluoroelastomer compositions during cryogenic milling, to advantageously provide for micronized pellets possessing free-flowing behaviour, maintaining these advantageous flowing properties even after long storage at room temperature, and providing excellent mechanical properties in cured compounds deriving therefrom.

As such, there is a large need for non conductive binders compatible with inorganic materials suitable for use in the manufacture of battery components such as electrodes and of solid electrolyte layers through efficient fabrication processes.

### Summary of invention

The Applicant has now surprisingly found that amorphous (per)fluorinated polymer powders obtained by cryogrinding the same polymer in the form of slab in the presence of certain fluorinated polymers are particularly suitable for the preparation of battery components, in particular for components for solid state batteries, since they are more easily dissolved in solvents compatible with inorganic materials than the same polymer in the slab form.

It is thus an object of the invention a binder composition [binder (B)] for use in the preparation of components for electrochemical devices, characterized by comprising:
a) micronized pellets of a (per)fluoroelastomer composition [composition (E)], wherein composition (E) comprises at least one (per)fluoroelastomer [fluoroelastomer (A)] and at least one thermoplastic semicrystalline vinylidene fluoride polymer [polymer (F)] having weight average particle size (D50) below 500 µm;
b) at least one non-aqueous solvent (S) selected from the group consisting of nitrile-containing solvents, ethers, esters, thiols and thioethers, ketones, tertiary amines, and cyclic carbonate esters-.

Binder (B) is particularly suitable for use in the preparation of electrodes and solid electrolytes for secondary batteries.

It is thus another object of the invention an electrode-forming composition [composition (C)] for use in the preparation of electrodes for electrochemical devices, characterized by comprising:
a) at least one electrode active material (AM);
b) a binder (B) as above defined; and
c) optionally, at least one conductive agent.

A further object of the invention is thus a process for manufacturing an electrode for a secondary battery comprising the steps of:
A) providing an electrode-forming composition (C) as above defined;
B) providing a metal substrate having at least one surface;
C) applying the electrode-forming composition (C) provided in step A) onto the at least one surface of the metal substrate provided in step B), thereby providing an assembly comprising a metal substrate coated with said composition (C) onto the at least one surface;
D) drying the assembly provided in step C).

In another object, the present invention provides an electrode for a secondary battery obtainable by the process as above defined.

In another object, the present invention provides a composition (CC) that is suitable for preparing a composite solid electrolyte film, said composition comprising:
i) at least one sulfide-based solid electrolyte;
ii) a binder (B) as above defined.

A further object of the invention is thus a process for manufacturing a composite solid electrolyte film for solid state batteries comprising the steps of:
I) processing the composition (CC) as above defined to form a wet film of a solid composite electrolyte; and
II) drying the wet film provided in step (I).

In another object, the present invention provides a composite solid electrolyte film obtained by said process.

In still a further object, the present invention provides a solid state battery comprising a composite solid electrolyte film and/or at least one electrode of the present invention.

### Detailed description

In the context of the present invention, the term "percent by weight" (wt. %) indicates the content of a specific component in a mixture, calculated as the ratio between the weight of the component and the total weight of the mixture. When referred to the total solid content (TSC) of a liquid composition, weight percent (wt. %) indicates the ratio between the weight of all non-volatile ingredients in the liquid.

By the term "electrochemical cell", it is hereby intended to denote an electrochemical cell comprising a positive electrode, a negative electrode and an electrolyte, wherein a monolayer or multilayer separator is adhered to at least one surface of one of said electrodes.

Non-limitative examples of electrochemical cells include, notably, batteries, preferably secondary batteries, and electric double layer capacitors.

For the purpose of the present invention, by "secondary battery" it is intended to denote a rechargeable battery. Non-limitative examples of secondary batteries include, notably, alkaline or alkaline-earth secondary batteries.

Composition (E) used in binder (B) comprises micronized pellets of a (per)fluoroelastomer composition. Said composition (E) comprises at least a (per)fluoroelastomer [fluoroelastomer (A)] and at least one thermoplastic semicrystalline vinylidene fluoride polymer [polymer (F)].

For the purposes of this invention, the term "(per)fluoroelastomer" [fluoroelastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer) .

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride; 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR_{f2} in which R_{f2} is a C₁-C₆ fluoro- or perfluoroalkyl, e.g. - CF₃, -C₂F₅, -C₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Y₀ is a C₁-C₁₂ alkyl or (per)fluoroalkyl, or a C₁-C₁₂ oxyalkyl or a C₁-C₁₂ (per)fluorooxyalkyl, said Y₀ group comprising a carboxylic or sulfonic acid group, in its acid, acid halide or salt form;
- fluorodioxoles, of formula : 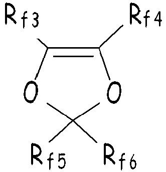
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, - C₃F₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

(Per)fluoroelastomers (A) are amorphous products or products having very low degree of crystallinity (heat of fusion of less than 4 J/g, preferably less than 3 J/g, when measured according to ASTM D 3418) and a glass transition temperature (T_{g}) below room temperature. In most cases, the fluoroelastomer (A) has advantageously a T_{g} below 10°C, preferably below 5°C, more preferably below 0°C.

The (per)fluoroelastomer (A) is preferably a fluoroelastomer.

In a preferred embodiment, the fluoroelastomer (A) is a VDF-based copolymer, in which VDF is copolymerized with at least one comonomer selected from the group consisting of followings classes:
(a) C₂-C₈ perfluoroolefins , such as tetrafluoroethylene (TFE), hexafluoropropylene (HFP), hexafluoroisobutylene;
(b) hydrogen-containing C₂-C₈ olefins, such as vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c) C₂-C₈ chloro and/or bromo and/or iodo-fluoroolefins such as chlorotrifluoroethylene (CTFE);
(d) (per)fluoroalkylvinylethers (PAVE) of formula CF₂ = CFOR_{f}, wherein R_{f} is a C₁-C₆ (per)fluoroalkyl group, e.g. CF₃, C₂F₅, C₃F₇;
(e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f) (per)fluorodioxoles having formula : 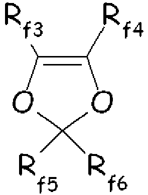 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
(g) (per)fluoro-methoxy-vinylethers (MOVE, hereinafter) having formula:

   CFX₂ = CX₂OCF₂OR"_{f}

   wherein R"_{f} is selected among C₁-C₆ (per)fluoroalkyls , linear or branched; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"_{f} is -CF₂CF₃ (MOVE1); -CF₂CF₂OCF₃ (MOVE2); or -CF₃ (MOVE3);
(h) C₂-C₈ non-fluorinated olefins (Ol), for example ethylene and propylene.

Optionally, (per)fluoroelastomers (A) of the present invention also comprises recurring units derived from a bis-olefin [bis-olefin (OF)] having general formula : 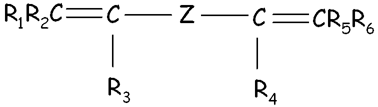 wherein R₁, R₂, R₃, R₄, R₅ and R₆, equal or different from each other, are H or C₁-C₅ alkyl; Z is a linear or branched C₁-C₁₈ alkylene or cycloalkylene radical, optionally containing oxygen atoms, preferably at least partially fluorinated, or a (per)fluoropolyoxyalkylene radical, e.g. as described in EP 661304 A (AUSIMONT SPA) 7/5/1995 .

The bis-olefin (OF) is preferably selected from the group consisting of those complying with formulae (OF-1), (OF-2) and (OF-3) : 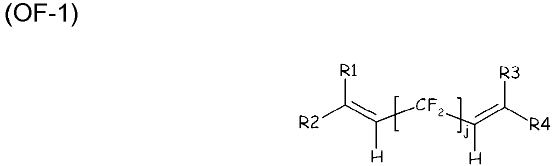
wherein j is an integer between 2 and 10, preferably between 4 and 8, and R1, R2, R3, R4, equal or different from each other, are H, F or C₁₋₅ alkyl or (per)fluoroalkyl group; 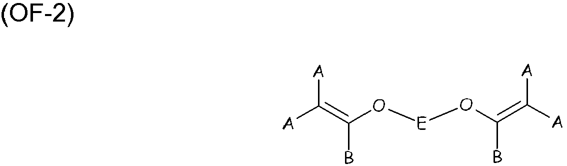
wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages;
preferably E is a -(CF₂)ₘ- group, with m being an integer from 3 to 5; a preferred bis-olefin of (OF-2) type is F₂C=CF-O-(CF₂)₅-O-CF=CF₂. 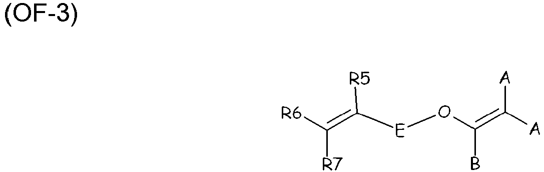
wherein E, A and B have the same meaning as above defined; R5, R6, R7, equal or different from each other, are H, F or C₁₋₅ alkyl or (per)fluoroalkyl group.

Among specific compositions of fluoroelastomers (A) suitable for the purpose of the invention, mention can be made of the following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, bis-olefin (OF) 0-5 %;
(ii) vinylidene fluoride (VDF) 50-80 %, perfluoroalkyl vinyl ethers (PAVE) 5-50 %, tetrafluoroethylene (TFE) 0-20 %, bis-olefin (OF) 0-5 %;
(iii) vinylidene fluoride (VDF) 20-30 %, C₂-C₈ non-fluorinated olefins (Ol) 10-30 %, hexafluoropropene (HFP) and/or perfluoroalkyl vinyl ethers (PAVE) 18-27 %, tetrafluoroethylene (TFE) 10-30 %, bis-olefin (OF) 0-5 %;
(iv) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, bis-olefin (OF) 0-5 %;

The (per)fluoroelastomers (A) can be prepared by any known method, such as emulsion or micro-emulsion polymerization, suspension or micro-suspension polymerization, bulk polymerization and solution polymerization.

Polymer (F) is semicrystalline, i.e. it has an at least partially crystalline structure. The semicrystalline thermoplastic VDF polymer generally has a heat of fusion, measured according to ASTM standard D 3418, of at least 5 J/g, preferably of at least 15 J/g and more preferably of at least 25 J/g.

The polymer (F), by virtue of its combined attributes of average particle size lower than 500 µm being semicrystalline, can be advantageously used in the preparation of micronized pellets of composition (E).

The calculation of the average particle size can be made according to the methods known to the person skilled in the art, e.g. according to ISO 13320.

The semicrystalline thermoplastic VDF polymer used in the present invention is advantageously chosen from VDF homopolymers and copolymers of VDF with one or more fluorinated monomer and/or, hydrogenated monomer.

The term "fluorinated monomer" is intended to denote an ethylenically unsaturated monomer comprising at least one fluorine atom.

The term "hydrogenated monomer" is intended to denote an ethylenically unsaturated monomer comprising at least one hydrogen atom and free from fluorine atoms.

Preferably, said polymer (F) comprises recurring units derived VDF and recurring units derived from at least one hydrogenated monomer comprising at least one carboxylic acid end group [monomer (MA)] and/or recurring units derived from at least one fluorinated monomer different from VDF.

According to a preferred embodiment, said polymer (F) comprises, more preferably consists of:
(I) recurring units derived from VDF and
(II) recurring units derived from at least one monomer (MA).

Advantageously, said monomer (MA) complies with the following chemical formula: 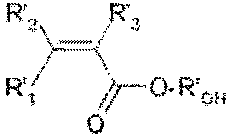 wherein:
- R'₁, R'₂ and R'₃ are hydrogen atoms, and
- R'_{OH} is a hydrogen atom or a C₁-C₅ hydrocarbon moiety comprising at least one hydroxyl group.

Non-limiting examples of said monomer (MA) are, notably, acrylic acid, methacrylic acid, hydroxyethylmethacrylate, hydroxyethylacrylate, hydroxypropylmethacrylate, hydroxypropylacrylate, hydroxyethylhexyl methacrylate, hydroxyethylhexylacrylate, and mixtures thereof.

The Applicant has surprisingly found that when polymer (F) consists of
(I) recurring units derived from VDF and
(II) recurring units derived from at least one monomer (MA),
the micronized pallets of composition (E) are particularly fine with very few aggregates.

The binder (B) comprising the polymer (F) according to this preferred embodiment shows a low level of packing and / or compressibility of the powder, which may provide a great advantage in some conditions of storage and transport of the powder: in fact, the high temperatures and pressures reached, e.g. on the bottom of drum containing the powder, may result in the aggregation of the material, which would therefore lose its character of powder and the resulting benefits.

Low level of packing and / or compressibility of the binder powder can be suitably demonstrated by simulating the pressures that can be reached with the storage of the material, by compressing the material in a device suitable for manufacturing tablets.

The binder (B) comprising the polymer (F) consisting of
(I) recurring units derived from VDF and
(II) recurring units derived from at least one monomer (MA),
is not compacted in said conditions, but remains as a free-flowing powder once the piston pressure in the device is removed.

An additional test that can be used to demonstrate the low level of packing and / or compressibility of the binder powders involves the passage of the material into an orifice, such as a funnel. The binder (B) comprising polymer (F) according to this preferred embodiment advantageously flows smoothly, completely passing through the cone of the funnel.The amount of VDF in said copolymers is preferably greater than 85 mol % and more preferably greater than 90 mol %, based on the total amount of recurring units.

The fluorinated monomers containing at least one unsaturation of ethylenic type are preferably selected from the group consisting of classes (a), (b), (c), (d), (e), (f) and (g), as above described in combination with the (per)fluoroelastomer (A).

The amount of polymer (F) in the composition is comprised between 2% and 50%, more preferably between 2% and 20% and even more preferably between 2% and 15% by weight relative to the total weight of the (per)fluoroelastomer (A) and of the polymer (F).

Some of the compositions (E) used in the preparation of binder (B) of the present invention are novel and represent further aspects of the present invention.

In another object, thus, the present invention provides micronized pellets of a composition (E) that comprises at least one (per)fluoroelastomer [fluoroelastomer (A)] and at least one thermoplastic semicrystalline vinylidene fluoride polymer [polymer (F)],
wherein polymer (F) in the composition (E) is present in an amount of at least 2% and lower than 5% by weight relative to the total weight of the (per)fluoroelastomer (A) and of the polymer (F).

The Applicant has surprisingly found that the composition (E) comprising polymer (F) in an amount of at least 2% and lower than 5% by weight is particularly suitable from processing point of view when binder (B) is used in the preparation of electrodes. In fact, thanks to the flowing properties and fast dissolution of the powder it is possible to prepare the electrode-forming composition while maintaining excellent properties in batteries.

Composition (E) can be prepared by a milling process that can be advantageously carried out in any milling device designed to break a solid material into smaller pieces. Among milling devices which are suitable in the process of the invention, mention can be made of ball mill, conical mill, disk mill, hammer mill, rod mill, and vibratory mill.

Generally, milling devices equipped with a shaft and rotating blades are preferred.

Milling is carried out at a temperature below glass transition temperature of the (per)fluoroelastomer (A); these conditions are required for advantageously ensuring (per)fluoroelastomer (A) to have a brittle behaviour and thus advantageously undergoing downsizing without massing or sticking.

Generally, milling is carried out at a temperature of at least 5°C, preferably at least 10°C, more preferably at least 20°C below glass transition temperature of the (per)fluoroelastomer (A).

Lower boundaries for milling temperatures are not particularly critical and will be chosen by the skilled in the art taking into account availability and economy of cooling devices. Milling temperatures comprised between -20 and -50 °C are generally set.

For the purpose of the invention, the term "micronized pellets" is intended to denote a mass of material that, from a geometrical point of view, has a definite three-dimensional volume and shape, characterized by three dimensions, wherein, generally, none of said dimensions exceed the remaining two other dimensions of more than 10 times.

These micronized pellets advantageously possess a free-flowing behaviour at room temperature, that is to say that each pellet is loosely provided, with substantially no sticking or massing phenomena.

The Applicant has surprisingly observed the easy and fast dissolution of the micronized pellets of composition (E) in solvents commonly used for preparing binders for electrochemical devices components, which is much faster than that of the (per)fluoroelastomer (A) in the form of slab and at the same time is comparable with that of (per)fluoroelastomer powder compositions comprising commonly used antisticking agents such as calcium stearate.

The binder composition (B) of the present invention comprises the composition (E) as above defined and at least one non-aqueous solvent (S) commonly used for preparing binders for electrochemical devices. The solvent (S) is substantially water free, the water content being preferably 100 ppm or less.

There are no specific restrictions imposed on the non aqueous solvent (S), as long as the solvent i) is able to dissolve the fluoroelastomer (A), and, ii) when binder (B) is used for preparing a composite solid electrolyte film, the solvent is compatible with the sulfide-based solid electrolyte, meaning the solvent has no negative impact on the ionic conductivity of the solid electrolyte.

The solvent (S) can suitably be selected from the group consisting of nitrile-containing solvents, ethers, esters, thiols and thioethers, ketones, tertiary amines, and cyclic carbonate esters.

Suitable nitrile-containing solvents have general formula of R-CN, where R represents an alkyl group. Non-limiting examples of nitrile-containing solvents are acetonitrile, butyronitrile, valeronitrile, isobutylnitrile and the like.

Suitable ethers have general formula R₁-O-R₂, where R₁ and R₂ represent independently an alkyl group. Included in the ether solvents are cyclic ethers based on 3, 5 or 6-membered rings. The cyclic ethers can be substituted with alkyl groups, can have unsaturations and can have additional functional elements such as nitrogen or oxygen atoms inside the ring. Non-limiting examples of (cyclic) ether solvents are diethylether, 1,2-dimethoxyether, cyclopentyl methyl ether, dibutyl ether, anisole, tetrahydrofuran, methyl tetrahydrofuran, tetrahydropyran and the like.

Suitable esters have general formula of R₃-COOR₄, where R₃ and R₄ represents independently an alkyl group. Non-limiting examples of ester solvents are butyl acetate, butyl butyrate, ethyl benzoate and the like.

Suitable ketones have general formula of R₅R₆CO, where R₅ and R₆ represents independently an alkyl group. Non-limiting examples of ketone solvents are methyl ethyl ketone, methyl isobutyl ketone, di-isobutyl ketone, acetophenone, benzophenone and the like.

Suitably, thiols have formula R₇=S-H and thioethers have general formula of R₈-S-R₉, where R₇, R₈ and R₉ are independently an alkyl group. Included in the thioether solvents are cyclic thioethers based on 3, 5 or 6 membered rings. The cyclic thioethers can be substituted with alkyl groups, can have unsaturations and can have additional functional elements such as nitrogen or oxygen atoms inside the ring. Non-limiting examples of thiol solvents are ethanethiol, tert-dodecyl mercaptan, thiophenol, t-butyl mercaptan, octanethiol, dimethylsulfide, ethylmethylsulfide, methyl benzylsulfide and the like.

Suitable tertiary amines have general formula of R₁₀R₁₁R₁₂N, where R₁₀, R₁₁ and R₁₂ represents independently an alkyl group. The N atom of the tertiary amine can be buried inside a 3, 5 or 6 membered ring. Non-limiting examples of tertiary amine solvents are triethylamine, dimethylbutylamine, tributylamine, cyclohexyldimethylamine, N-ethylpiperidine and the like.

In the present invention, the alkyl groups of R₁ to R₁₂ respectively refer to "alkyl groups" including saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups as defined above. Additionally, the alkyl groups may include functional groups such as 1 or more unsaturations, ethers, carbonyl, carboxyl, hydroxyl, thio, thiol, thioxy, sulfo, nitrile, nitro, nitroso, azo, amide, imide, amino, imino or halogen.

The binder (B) may include additional co-solvents, such as cyclic, acyclic or aromatic hydrocarbons. Suitably, the co-solvent can be selected from the group consisting of heptane, toluene, xylene and mesitylene.

Binder (B) can be prepared by dissolving composition (E) in solvent (S) at a temperature comprised between 10 and 100 °C, preferably at a temperature of about 20 to 80 °C, under stirring.

The skilled in the art, depending on the boiling point of the at least one solvent (S), will select the proper amount of said solvent (S) in composition (C) in order to achieve dissolution of the composition (E) and suitable evaporation of the same when composition (C) is used in the process for manufacturing an electrode or a solid electrolyte film.

In one embodiment, binder (B) is a solution of composition (E) in solvent (S), wherein composition (E) is present in the binder (B) in an amount comprised between 5 and 30% by weight, preferably between 7 and 20 % by weight, the aforementioned percentages by weight being referred to the total weight of the binder (B).

As known in the art, an electrode forming composition is a composition of matter, typically a fluid composition, wherein solid components are dissolved or dispersed in a liquid, which can be applied onto a metallic substrate and subsequently dried thus forming an electrode wherein the metallic substrate acts as current collector. Electrode forming compositions typically comprise at least an electro active material and at least a binder.

The electrode-forming composition [composition (C)] of the present invention comprises micronized pellets of a (per)fluoroelastomer composition [composition (E)], which function as a binder.

The preparation of an electrode-forming composition comprises the preparation of a binder composition to be then added with the powdery electrode active material and, optionally, the at least one conductive agent.

The electrode-forming composition [composition (C)] of the present invention comprises:
a) at least one electrode active material (AM);
b) a binder (B) as above defined; and
c) optionally, at least one conductive agent.

For the purpose of the present invention, the term "electrode active material (AM)" is intended to denote a compound that is able to incorporate or insert into its structure and substantially release therefrom alkaline or alkaline-earth metal ions during the charging phase and the discharging phase of an electrochemical device. The electrode active material (AM) is preferably able to incorporate or insert and release lithium ions.

The nature of the electrode active material (AM) in composition (C) depends on whether said composition is used in the manufacture of a positive electrode [electrode (AMp)] or a negative electrode [electrode (AMn)].

In the case of forming a positive electrode (AMp) for a Lithium-ion secondary battery, the electrode active material (AM) may comprise a composite metal chalcogenide of formula LiMQ₂, wherein M is at least one metal selected from transition metals such as Co, Ni, Fe, Mn, Cr and V and Q is a chalcogen such as O or S. Preferred examples thereof may include:
- LiCoO₂ (LCO),
- LiNiO₂,
- LiNiₓCo₁₋ₓO₂ (0 < x < 1),
- spinel-structured LiMn₂O₄,
- Lithium nickel manganese cobalt oxide of formula LiNiₓMn_{y}Co_{z}O₂ (NMC), in particular those wherein with *x + y + z* that is near 1 such as LiNi _{0.333}Mn_{0.333}Co_{0.333}O₂ (NMC111), LiNi_{0.6}Mn_{0.2}Co_{0.2}O₂ (NMC622) and LiNi_{0.8}Mn_{0.1}Co_{0.1}O₂ (NMC811), and
- lithium nickel cobalt aluminum oxides (NCA) of general formula LiNiₓCo_{y}Al_{z}O₂ with *x + y + z =* 1.

As an alternative, still in the case of forming a positive electrode (AMp) for a Lithium-ion secondary battery, the electrode active material (AM) may comprise a lithiated or partially lithiated transition metal oxyanion-based electro-active material of formula M₁M₂(JO₄)_{f}E_{1-f}, wherein M₁ is lithium, which may be partially substituted by another alkali metal representing less than 20% of the M₁ metals, M₂ is a transition metal at the oxidation level of +2 selected from Fe, Mn, Ni or mixtures thereof, which may be partially substituted by one or more additional metals at oxidation levels between +1 and +5 and representing less than 35% of the M₂ metals, including 0, JO₄ is any oxyanion wherein J is either P, S, V, Si, Nb, Mo or a combination thereof, E is a fluoride, hydroxide or chloride anion, f is the molar fraction of the JO₄ oxyanion, generally comprised between 0.75 and 1.

The M₁M₂(JO₄)ᵣE_{1-f} electro-active material as defined above is preferably phosphate-based and may have an ordered or modified olivine structure.

More preferably, the electrode active material (AM) in the case of forming a positive electrode (AMp) has formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, the electrode active material (AM) is a phosphate-based electro-active material of formula Li(FeₓMn₁₋ₓ)PO₄ wherein 0≤x≤1, wherein x is preferably 1 (that is to say, lithium iron phosphate of formula LiFePO₄).

In the case of forming a negative electrode (AMn) for a Lithium-ion secondary battery, the electrode active material (AM) may preferably comprise a carbon-based material and/or a silicon-based material.

In some embodiments, the carbon-based material may be, for example, graphite, such as natural or artificial graphite, graphene, or carbon black.

These materials may be used alone or as a mixture of two or more thereof.

The carbon-based material is preferably graphite.

The silicon-based compound may be one or more selected from the group consisting of chlorosilane, alkoxysilane, aminosilane, fluoroalkylsilane, silicon, silicon chloride, silicon carbide and silicon oxide. More particularly, the silicon-based compound may be silicon oxide or silicon carbide.

When present in electrode active material (AM), the at least one silicon-based compound is comprised in the electrode active material (AM) in an amount ranging from 1 to 70 %, preferably from 1 to 50 %, more preferably from 1 to 30 % by weight, still more preferably from 5 to 20 % by weight with respect to the total weight of the electrode active material (AM).

An optional conductive agent may be added in order to improve the conductivity of a resulting electrode.

Examples thereof may include: carbonaceous materials, such as carbon black, graphite fine powder multiwall or single wall carbon nanotubes, graphene, vapor grown carbon (nano)fibers, or fiber, or fine powder or fibers of metals such as nickel or aluminum, silver. The optional conductive agent is preferably carbon black. Carbon black is available, for example, under the brand names, Super P^{®} or Ketjenblack^{®}.

When present, the conductive agent is different from the carbon-based material described above.

Composition (C) is also particularly suitable for use in the preparation of electrodes for solid state batteries, which further comprise at least one sulfide-based solid electrolyte. The composition (C) further comprising at least one sulfide-based solid electrolyte will be identified hereinafter as composition (C1).

In a further embodiment of the present invention, it is thus provided an electrode-forming composition (C1) suitable for use in the preparation of electrodes for solid state batteries, said composition (C1) comprising:
a) at least one electrode active material (AM);
b) a binder (B) as above defined; an
c) optionally, at least one conductive agent; and
d) at least one sulfide-based solid electrolyte.

As used here, the phrase "sulfide-based solid electrolyte," refers to an inorganic solid state material that conducts Li⁺ ions but is substantially electronically insulating.

In the present invention, the term "sulfide-based solid ionic conducting inorganic particle" is not particularly limited as long as it is a solid electrolyte material containing sulfur atom(s) in the molecular structure or in the composition.

The sulfide-based solid ionic conducting inorganic particle preferably contains Li, X (with X being P, Si, Sn, Ge, Al, As, or B) and S, to increase Li-ion conductivity.

The sulfide-based solid electrolyte according to the present invention is more preferably selected from the group consisting of:
- lithium tin phosphorus sulfide ("LSPS") materials, such as Li₁₀SnP₂S₁₂;
- lithium phosphorus sulfide ("LPS") materials, such as glasses, crystalline or glass-ceramic of those of formula (Li₂S)ₓ-(P₂S₅)_{y}, wherein x+y=1 and 0≤x≤1, Li₇P₃S₁₁, Li₇PS₆, Li₄P₂S₆, Li_{9.6}P₃S₁₂ and Li₃PS₄;
- doped LPS, such as Li₂CuPS₄, Li Li₁₊₂ₓZn₁₋ₓPS₄, wherein 0≤x≤1, Li_{3.33}Mg_{0.33}P₂S₆, and Li₄₋₃ₓSCₓP₂S₆, wherein 0≤x≤1;
- lithium phosphorus sulfide oxygen ("LPSO") materials of formula LixPySzO, where 0.33≤x≤0.67, 0.07≤y≤0.2, 0.4≤z≤0.55, 0≤w≤0.15;
- lithium phosphorus sulfide materials including X ("LXPS"), wherein X is Si, Ge, Sn, As, Al, such as Li₁₀GeP₂S₁₂ and Li₁₀SiP₂S₁₂;
- lithium phosphorus sulfide oxygen including X ("LXPSO"), wherein X is Si, Ge, Sn, As, Al;
- lithium silicon sulfide ("LSS") materials;
- lithium boron sulfide materials, such as Li₃BS₃ and Li₂S- B₂S₃-LiI;
- lithium tin sulfide materials and lithium arsenide materials, such as Li_{0.8}Sn_{0.8}S₂, Li₄SnS₄, Li_{3.833}Sn_{0.833}As_{0.166}S₄, Li₃AsS₄-Li₄SnS₄, Ge-substituted Li₃AsS₄; and
- Argyrodite-type sulfide materials of general formula Li₇₋ₓPS₆₋ₓXₓ
wherein:
- Y represents at least one halogen element selected in the group of Cl, Br and I or a combination thereof; and x represents a positive number from 0.8 to 2.0, such asthe compounds being possibly deficient in sulfur, lithium or halogen, for instance Li₆₋ₓPS₅₋xCl₁₊ₓ with 0≤x≤0.5, or doped with a heteroatom.

Particularly preferred sulfide solid electrolytes are LPS materials, LSPS materials and Argyrodite-type sulfide materials.

A further object of the invention is thus a process for manufacturing an electrode for a secondary battery comprising the steps of:
A) providing an electrode-forming composition (C) as above defined;
B) providing a metal substrate having at least one surface;
C) applying the electrode-forming composition (C) provided in step A) onto the at least one surface of the metal substrate provided in step B), thereby providing an assembly comprising a metal substrate coated with said composition (C) onto the at least one surface;
D) drying the assembly provided in step C).

In another object, the present invention provides an electrode for a secondary battery obtainable by the process as above defined.

When the composition (C) used in the manufacturing of an electrode is composition (C1), the present invention provides an electrode for solid-state batteries obtainable by the process as above defined.

The binder composition (B) of the present invention is particularly suitable also for preparing composite solid electrolyte film, when added with at least one sulfide-based solid electrolyte.

In another object, the present invention thus provides a composition (CC) that is suitable for preparing a composite solid electrolyte film, said composition comprising:
i) at least one sulfide-based solid electrolyte; and
ii) a binder (B) as above defined.

In the present invention, the term "composite solid electrolyte film" refers to a composite film having lithium ionic conductivity, which may be in the form of a foldable and flexible film, and in some embodiments, may have a free-standing shape at room temperature without a support.

Composition (CC) can be suitably prepared by a process comprising mixing binder (B) with the sulfide-based solid electrolyte material by any method known to the skilled in the art. In a preferred embodiment, composition (CC) is prepared by a process comprising solubilizing composition (E) in solvent (S) to provide binder (B), followed by adding the sulfide-based solid electrolyte material and mixing the resulting mixture.

The amount of composition (E) in composition (CC) is such to provide a composite solid electrolyte film including composition (E) in an amount preferably ranging from 2 to 30 wt %, preferably from 2 and 20 wt %, more preferably from 2 to 15 wt % with respect to the total weight of composition (E) and sulfide-based solid electrolyte material.

If the amount of the composition (E) is less than 2 wt %, cohesion of the sulfide-based solid electrolyte material in the composite solid electrolyte film would be insufficient. On the other hand, if the amount of composition (E) exceeds 30 wt %, ionic conductivity the composite solid electrolyte film is affected.

In another object, the present invention is directed to a process for manufacturing a composite solid electrolyte film for solid state batteries comprising the steps of:
I) processing the composition (CC) as above defined to form a wet film of a solid composite electrolyte; and
II) drying the wet film provided in step (I).

In step (I) of the process of the invention, the composition (CC) can be applied onto at least one foil of inert flexible support, or directly onto the surface of at least one electrode, by a technique selected from casting, spray coating, rotating spray coating, roll coating, doctor blading, slot die coating, gravure coating, ink jet printing, spin coating and screen printing, brush, squeegee, foam applicator, curtain coating, vacuum coating, casting being the preferred one.

The wet film so obtained typically has a thickness comprised between 10 µ m and 400 µm, preferably between 50 µm and 400 µm.

In step (II) of the process of the invention, the composition (CC) is dried at a temperature preferably comprised between 10°C and 150°C, preferably between 20°C and 120°C.

An additional drying step in an oven under vacuum at a temperature preferably comprised between 20°C and 150°C, preferably between 30°C and 120°C can be suitably carried out to achieve complete solvent removal.

The skilled in the art, depending on the boiling point of the at least one solvent (S), will select the proper duration and temperature of the drying step (II) of the process.

The dry film obtained in step (II) of the process typically has a thickness comprised between 10 µm and 150 µm.

The process of the invention for preparing a composite solid electrolyte film may further include an additional step (III) of subjecting the dry film provided in step (II) to a compression step, such as a calendering or uniaxial compression process, to lower the porosity and increase the density of the composite solid electrolyte film.

In a further object, the present invention provides a solid state battery comprising a composite solid electrolyte film as above defined.

The solid state battery of the invention includes a positive electrode and a negative electrode,
wherein preferably at least one of the negative electrode or the positive electrode is an electrode according to the invention.

Should the disclosure of any patents, patent applications, and publications which are incorporated herein by reference conflict with the description of the present application to the extent that it may render a term unclear, the present description shall take precedence.

The invention is described hereunder in more detail with reference to the following examples, which are provided with the purpose of merely illustrating the invention, with no intention to limit its scope.

### Experimental Section

### Materials and Methods

Polymer A1= vinylidene fluoride/hexafluoropropylene copolymer having 66.0 % fluorine content; Mooney viscosity (ML 1+10') measured at 121 °C according to ASTM D1646 = 62 MU, available under the form of slabs and having a T_{g} of about - 18°C.

Polymer A2= vinylidene fluoride/hexafluoropropylene copolymer having 66.0 % fluorine content; Mooney viscosity (ML 1+10') measured at 121 °C according to ASTM D1646 = 40 MU, available under the form of slabs and having a T_{g} of about -18°C.

Polymer A3= vinylidene fluoride/tetrafluoroethylene/methylvinylether copolymer having 66.0 % fluorine content; Mooney viscosity (ML 1+10') measured at 121 °C according to ASTM D1646 = 23 MU, available under the form of slabs and having a T_{g} of about -32°C.

Polymer F1= vinylidene fluoride/acrylic acid (0.2% wt), MW of 512 kDalton, melting point (Tm2)= 160.4°C, and a heat of fusion of 51.5 J/g (determined according to ASTM D3418) and average particle size (D50) of 3.4 µm. Polymer F2: SOLEF^{®} 21510 VDF/HFP semicrystalline polymer having a heat of fusion, measured according to ASTM standard D 3418, of 23 J/g and average particle size (D50) of 137 µm, commercially available from Solvay.

Polymer F3: SOLEF^{®} 6020 PVDF semicrystalline homopolymer having a heat of fusion, measured according to ASTM standard D3418, of 50 J/g and average particle size (D50) of 93 µm, commercially available from Solvay.

Calcium stearate (CaSt hereinafter), commercially available from FACI Asian pacific PTE LTD.

Butyl butyrate, commercially available from Sigma-Aldrich.

Solef^{®} 5130, VDF/AA copolymer commercially available from Solvay.

C-NERGY^{™} SUPER C65 (SC-65), commercially available from Imerys Graphite & Carbon.

Active material LCO: Lithium Cobalt Oxide (LiCoO₂), commercially available from Umicore SA.

### General procedure for the manufacture of micronized pellets

Slabs of Polymer A1, A2 or A3 were cut into medium dimensions crumbs (volume below 5mm³) and immersed in liquid nitrogen to cool the same below their glass transition temperature; the cooled slabs were then introduced in the tube of the grinding machine (model 6870D from SPEX Sample Prep), generally at a temperature in the range -20°C / - 50°C, in combination with the powder of polymer F1, polymer F2, polymer F3 or with CaSt (comparative), in required amount. Compositional ranges of mixtures milled in the different experiments are detailed in Table 1:

**Table 1**

| **Material (g)** | **Ex. 1** | **Ex. 2** | **Ex. 3** | **Ex. 4** | **Ex. 5** | **Ex. 6** | **Ex. 7** | **Ex. 1 Comp.** |
|---|---|---|---|---|---|---|---|---|
| A1 | 4.25 | 4.625 | 4.8125 | 4.8125 | | 4.8125 | | 4.625 |
| A2 | | | | | 4.625 | | | |
| A3 | | | | | | | 4.8125 | |
| F1 | 0.75 | 0.375 | 0.1875 | | 0.375 | | 0.1875 | |
| F2 | | | | 0.1875 | | | | |
| F3 | | | | | | 0. 1875 | | |
| CaSt | | | | | | | | 0.1875 |

The micronized pellets obtained vary from fine powder to powders including agglomerates of hundreds of µm and mm. Said agglomerates were but easily broken with manual stirring.

### Dissolution kinetics tests

Micronized pellets of examples 1 to 5 and 7 and comparative examples 1 and 2 were mixed with butyl butyrate at a concentration of 10% wt.

The test started at RT and a T ramp of 1°C/min was imposed, till 40°C temperature was reached.

Normalized torque of the compositions of micronized pellets in butyl butyrate were measured as a function of time. The instrument used was a Rheolab QC, with a cylindrical cup and the dedicated geometry (ST24-2D/2V/2V-30/129 (s.n. 39366) - Anton Paar.). The initial imposed rotating speed was of 600 RPM, which reached 800RPM at 40°C. Solubility was assumed when normalized torque reached a plateau, meaning that the stress to obtain a fixed rotation speed of the bob was constant, this due to completed solubility

Easy and fast dissolution of the obtained powders was observed, for all the micronized pellets comprising antisticking agents. All the five samples showed complete dissolution after around 25 minutes.

The solutions of comparative example 1 and of comparative example 2 were less transparent than those of examples 1 to 5 and 7, and slightly whitish. Moreover, a thin deposit was observed at the bottom of the vial after one week at rest.

Dissolution times and appearance of the solutions obtained are reported in Table 2.

### Comparative example 2

5 g of slabs of polymer A1 were mixed with butyl butyrate to obtain a 10% wt composition and treated as reported above for the dissolution kinetic test.

The dissolution time of polymer A1 in the form of slab, was longer (more than double) vs. the same polymer A1 in the form of micronized pellets (thus subjected to the milling process at a temperature same below their glass transition temperature).

Dissolution time and appearance of the solution obtained is reported in Table 2.

### Particle size distribution (PSD)

Particle size distribution of micronized pellets of example 3 and of comparative example 1 were measured according to ISO 13320 with a Beckman Coulter LS 13 320.

Results are reported in Table 2 as a mean over 5 measures on about 0.25 cc of material (refractive index 1.4 for VDF polymers).

**Table 2**

| | **Dissolution times (minutes)** | **Appearance (after dissolution)** | **PSD d₅₀%** |
|---|---|---|---|
| Example 1 | ≈25 | Limpid | |
| Example 2 | ≈25 | Limpid | |
| Example 3 | ≈25 | Limpid | 378.6 µm |
| Example 4 | ≈25 | Limpid | 529.0 µm |
| Example 5 | ≈25 | Limpid | 480.5 µm |
| Example 7 | ≈30 | Limpid | |
| Comparative Ex. 1 | ≈25 | Whitish/turbid | 448.7 µm |
| Comparative Ex. 2 (slabs) | ≥75 | Limpid | |

### Electrochemical stability

Electrochemical stability of the polymers used as antisticking agents in the compositions of the invention was evaluated by determining the oxidative potential via linear sweep voltammetry (LSV) of electrodes containing the antisticking agents polymer F1, polymer F2, polymer F3 and CaSt and conductive carbon.

### Electrode production

### Example E1: anti-sticking polymer F3

500 mg of polymer F3 was dissolved in 9.5 g of n-methyl-2-pyrrolidone (NMP) under magnetic stirring for 12 hours to produce a viscous solution (Solution A). 2 g of solution A were mixed with 43 mg of conductive carbon Super C65 (Imerys) in a speedmixer (flacktek) at 2000 RPM for 10 min to produce a homogeneous black viscous ink. The ink was deposited onto an Al foil and knife coated with a wet thickness of 200 µm to produce an electrode (electrode A). Electrode A was dried under a fume hood at 70°C for 2h and further dried at 90°C under vacuum (20 mbar) for 12h.

### Example E2: anti-sticking polymer F2

1 g of polymer F2 was dissolved in 9 g of NMP under magnetic stirring for 12 hours to produce a viscous solution (Solution B). 2 g of solution B were mixed with 86 mg of conductive carbon Super C65 (Imerys) in a speedmixer (flacktek) at 2000 RPM for 10 min to produce a homogeneous black viscous ink. The ink was deposited onto an Al foil and knife coated with a wet thickness of 200 µm to produce an electrode (electrode B). Electrode B was dried under a fume hood at 70°C for 2h and further dried at 90°C under vacuum (20 mbar) for 12h.

### Example E3: anti-sticking polymer F1

1 g of polymer F1 was dissolved in 9 g of NMP under magnetic stirring for 12 hours to produce a viscous solution (Solution C). 2 g of solution C were mixed with 86 mg of conductive carbon Super C65 (Imerys) in a speedmixer (flacktek) at 2000 RPM for 10 min to produce a homogeneous black viscous ink. The ink was deposited onto an Al foil and knife coated with a wet thickness of 200 µm to produce an electrode (electrode C). Electrode C was dried under a fume hood at 70°C for 2h and further dried at 90°C under vacuum (20 mbar) for 12h.

### Comparative example E1: anti-sticking CaSt

Since with CaSt no film can be obtained, CaSt was embedded into a stable binder (Solef^{®} 5130). A 3 components electrode was made of CaSt - C65 - Solef^{®} 5130 in ratio 4-3-3.

500 mg of Solef^{®} 5130 were dissolved in 9.5 g of NMP under magnetic stirring for 12 hours to produce a viscous solution (Solution D). 2 g of solution A + 100 mg of Super C65 + 130 mg of CaSt were mixed for 20 min at 2000 RPM in a speed mixer to produce a homogeneous black viscous ink. The ink is deposited onto an Al foil and knife coated with a wet thickness of 200 µm to produce an electrode (electrode D). Electrode D was dried under a fume hood at 70°C for 2h and further dried at 70°C under vacuum (20 mbar) for 12h.

In order to verify the inertness of the polymeric binder used in comparative example E1, a carbon Solef^{®} 5130 electrode was prepared. 2 g of solution D were mixed with 43 mg of conductive carbon Super C65 (Imerys) in a speedmixer (flacktek) at 2000 RPM for 10 min to produce a homogeneous black viscous ink. The ink was deposited onto an Al foil and knife coated with a wet thickness of 200 µm to produce an electrode (electrode E). Electrode E was dried under a fume hood at 70°C for 2h and further dried at 90°C under vacuum (20 mbar) for 12h.

Electrodes were assembled in a cell using lithium metal as counter and reference electrode and 1M LiPF6 in ethylene carbonate/dimethyl carbonate (1/1 vol%) as electrolyte. After a resting period of 5h enabling the wetting of the electrode by the electrolyte, a linear sweep voltammetry was performed (LSV). During the LSV, the potential was gradually increased and the current required to increase the potential was monitored. Increase in current corresponds to oxidation reactions occurrence.

### Evaluation of the oxidation potential:

### Cell production

In an Argon filled glovebox, an 18 mm diameter disc was punched from any of the electrodes A-E as above described. Lithium cells were assembled with each disk of electrodes A-E using lithium metal disc (18 mm diameter) as reference / counter electrode, and 70 µl of LiPF6 in EC-DMC (1-1Vol).

### Testing conditions

Each cell was placed in a controlled temperature chamber at 20°C and let to rest for at least 5 h allowing the electrolyte to wet electrode. After 5 h, the LSV measurement started under the following conditions:
Starting potential: open circuit potential
Final potential: 6.5 V vs ref (Li counter electrode)
Rate: 0.1 mV/s

The LSV profile of all electrodes A to C and D (net of comparison with electrode E) is very similar, showing:
- a current increase starting at 3.8 V vs Li; this signal is attributed to the passivation of the Al current collector;
- the current is stable for all the tested electrodes until between 4.65 and 5.2 V, corresponding to the starting degradation of the conductive carbon super C65 and the liquid electrolyte. For comparative example E1, an additional decomposition peak is observed between 4.6 and 4.7 V corresponding to the oxidation of the Ca stearate anti-sticking agent. As such, Ca stearate, in contrast to the semi-crystalline fluorinated polymers, can provide negative impact on the stability and performance of batteries.

### Preparation of positive electrodes

### Binder compositions

10 wt% solutions in butyl butyrate of polymer A1 in the form of slabs cut manually into small pieces (binder 1) and of micronized pellets of elastomer composition of Example 3 -comprising polymer A1- (binder 2) were prepared under stirring in glassy flasks at RT. Solution viscosity was measured.

### Slurry preparation

Formulations with total solid content of 80%, comprising 2% wt binder, 2% wt SC65 and 96% wt LCO were prepared with both binder 1 (slurry 1) and binder 2 (slurry 2). Speedymixer polymeric containers were used to prepare the slurries.

### Viscosity

Slurry rheology was measured with Rheometer "Rheolab QC" from Anton Paar. The rheological profiles of slurries obtained starting from binder 1 and binder 2 were comparable, with slightly higher viscosities for the slurry containing the binder 2.

### Casting and drying

Slurry 1 and slurry 2 were casted onto Al current collector (15 µm thick, not etched, just cleaned with acetone).

The height of the coating knife is selected in order to reach the target loading (30 mg/cm2). Wet thicknesses between 200 and 300um are used. The speed of the coating machine is of 30mm/s.

The cast was transferred to the oven (preheated at 90°C): 25' at 90°C under dynamic vacuum around 500-600mbar (N₂ atmosphere) followed by 25' under static vacuum + 3' again dynamic at 600 mbar.

Electrode 1 was obtained from slurry 1 and electrode 2 was obtained from slurry 2.

### Pulloff adhesion

In order to evaluate the adhesion properties of positive electrodes 1 and 2 produced according to the above-described procedure, pulloff tests were performed. The tests consisted in a measurement of the force needed to detach the electrode coating from the aluminum current collector. During the test, a compression force was applied perpendicularly to the electrode by means of a cylindrical pin. The pin (with a biadhesive tape at the end) was afterwards retracted and the force needed to remove the electrode coating from the collector was measured.

The output of the test was comparable for electrode 1 and electrode 2, with no differences in the two cases. It is a proof that a positive electrode comprising the micronized pellets of composition (E) according to the present invention show no adhesion decrease in comparison with positive electrodes prepared by using a fluoroelastomer in the form of slabs, without any treatment and any presence of antisticking additive, while at the same time providing the advantage of faster solubility in the preparation of the binder. Results are summarized in Table 4.

**Table 4**

| | **PULLOFF ADHESION** |
|---|---|
| ELECTRODE 1 | 22.19 |
| ELECTRODE 2 | 21.99 |

## Claims

1. A binder composition [binder (B)] for use in the preparation of components for electrochemical devices, **characterized by** comprising:
a) micronized pellets of a (per)fluoroelastomer composition [composition (E)], wherein composition (E) comprises at least one (per)fluoroelastomer [fluoroelastomer (A)] and at least one thermoplastic semicrystalline vinylidene fluoride polymer [polymer (F)] having weight average particle size (D50), according to the method reported in the description, below 500 µm;
b) at least one non-aqueous solvent (S) selected from the group consisting of nitrile-containing solvents, ethers, esters, thiols and thioethers, ketones, tertiary amines, and cyclic carbonate esters-.

2. The binder (B) according to claim 1 wherein the fluoroelastomer (A) is a vinylidene fluoride (VDF)-based copolymer, in which VDF is copolymerized with at least one comonomer selected from the group consisting of followings classes:
(a) C₂-C₈ perfluoroolefins , such as tetrafluoroethylene (TFE), hexafluoropropylene (HFP), hexafluoroisobutylene;
(b) hydrogen-containing C₂-C₈ olefins, such as vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c) C₂-C₈ chloro and/or bromo and/or iodo-fluoroolefins such as chlorotrifluoroethylene (CTFE);
(d) (per)fluoroalkylvinylethers (PAVE) of formula CF₂ = CFOR_{f}, wherein R_{f} is a C₁-C₆ (per)fluoroalkyl group, e.g. CF₃, C₂F₅, C₃F₇;
(e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f) (per)fluorodioxoles having formula: 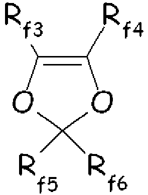 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, - C₃F₇, -OCF₃, -OCF₂CF₂OCF₃; preferably, perfluorodioxoles;
(g) (per)fluoro-methoxy-vinylethers (MOVE, hereinafter) having formula:
CFX₂ = CX₂OCF₂OR"_{f}
wherein R"_{f} is selected among C₁-C₆ (per)fluoroalkyls , linear or branched; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"_{f} is -CF₂CF₃ (MOVE1); -CF₂CF₂OCF₃ (MOVE2); or -CF₃ (MOVE3);
(h) C₂-C₈ non-fluorinated olefins (Ol), for example ethylene and propylene.

3. The binder (B) according to anyone of claim 1 or 2 wherein polymer (F) is selected from VDF homopolymers and copolymers of VDF with one or more fluorinated monomer and/or, hydrogenated monomer.

4. The binder (B) according to anyone of the preceding claims, wherein polymer (F) comprises, more preferably consists of:
(I) recurring units derived from VDF and
(II) recurring units derived from at least one hydrogenated monomer comprising at least one carboxylic acid end group [monomer (MA)].

5. The binder (B) according to anyone of the preceding claims, wherein the amount of polymer (F) in the composition is comprised between 2% wt and 50% wt, more preferably between 2% wt and 20% wt and even more preferably between 2% wt and 15% wt by weight relative to the total weight of the (per)fluoroelastomer (A) and of the polymer (F).

6. Micronized pellets of a composition (E) that comprise at least one (per)fluoroelastomer [fluoroelastomer (A)] and at least one thermoplastic vinylidene fluoride polymer [polymer (F)],
wherein polymer (F) in the composition (E) is present in an amount of at least 2% and lower than 5% by weight relative to the total weight of the (per)fluoroelastomer (A) and of the polymer (F).

7. An electrode-forming composition [composition (C)] for use in the preparation of electrodes for electrochemical devices, **characterized by** comprising:
a) at least one electrode active material (AM);
b) a binder (B) according to anyone of claims 1 to 5; and
c) optionally, at least one conductive agent.

8. The electrode-forming composition (C) according to claim 7, which further comprises
d) at least one sulfide-based solid electrolyte.

9. A process for manufacturing an electrode for a secondary battery comprising the steps of:
A) providing an electrode-forming composition (C) according to anyone of claims 7 or 8;
B) providing a metal substrate having at least one surface;
C) applying the electrode-forming composition (C) provided in step A) onto the at least one surface of the metal substrate provided in step B), thereby providing an assembly comprising a metal substrate coated with said composition (C) onto the at least one surface;
D) drying the assembly provided in step C).

10. An electrode for a secondary battery obtainable by the process according to claim 9.

11. A composition (CC) that is suitable for preparing a composite solid electrolyte film, said composition comprising:
i) at least one sulfide-based solid electrolyte;
ii) a binder (B) according to anyone of claims 1 to 5.

12. The composition (CC) according to claim 11, wherein the sulfide-based solid electrolyte is selected from the group consisting of:
- lithium tin phosphorus sulfide ("LSPS") materials, such as Li₁₀SnP₂S₁₂;
- lithium phosphorus sulfide ("LPS") materials, such as glasses, crystalline or glass-ceramic of those of formula (Li₂S)ₓ-(P₂S₅)_{y}, wherein x+y=1 and 0≤x≤1, Li₇P₃S₁₁, Li₇PS₆, Li₄P₂S₆, Li_{9.6}P₃S₁₂ and Li₃PS₄;
- doped LPS, such as Li₂CuPS₄, Li Li₁₊₂ₓZn₁₋ₓPS₄, wherein 0≤x≤1, Li_{3.33}Mg_{0.33}P₂S₆, and Li₄₋₃ₓSCₓP₂S₆, wherein 0≤x≤1;
- lithium phosphorus sulfide oxygen ("LPSO") materials of formula LixPySzO, where 0.33≤x≤0.67, 0.07≤y≤0.2, 0.4≤z≤0.55, 0≤w≤0.15;
- lithium phosphorus sulfide materials including X ("LXPS"), wherein X is Si, Ge, Sn, As, Al, such as Li₁₀GeP₂S₁₂ and Li₁₀SiP₂S₁₂;
- lithium phosphorus sulfide oxygen including X ("LXPSO"), wherein X is Si, Ge, Sn, As, Al;
- lithium silicon sulfide ("LSS") materials;
- lithium boron sulfide materials, such as Li₃BS₃ and Li₂S- B₂S₃-LiI;
- lithium tin sulfide materials and lithium arsenide materials, such as Li_{0.8}Sn_{0.8}S₂, Li₄SnS₄, Li_{3.833}Sn_{0.833}As_{0.166}S₄, Li₃AsS₄-Li₄SnS₄, Ge-substituted Li₃AsS₄; and
- Argyrodite-type sulfide materials of general formula Li₇₋ₓPS₆₋ₓXₓ
wherein:
- Y represents at least one halogen element selected in the group of Cl, Br and I or a combination thereof; and x represents a positive number from 0.8 to 2.0.

13. A process for manufacturing a composite solid electrolyte film for solid state batteries comprising the steps of:
I) processing the composition (CC) according to anyone of claim 11 or 12 to form a wet film of a solid composite electrolyte; and
II) drying the wet film provided in step (I).

14. A composite solid electrolyte film for solid state batteries obtainable by the process according to claim 13.

15. A solid state battery comprising a composite solid electrolyte film according to claim 14 and/or at least one electrode according to claim 10.

## Patentansprüche

1. Bindemittelzusammensetzung [Bindemittel (B)] zur Verwendung bei der Herstellung von Komponenten für elektrochemische Vorrichtungen, **dadurch gekennzeichnet, dass** sie Folgendes umfasst:
a) mikronisierte Pellets einer (Per)fluorelastomerzusammensetzung [Zusammensetzung (E)], wobei die Zusammensetzung (E) mindestens ein (Per)fluorelastomer [Fluorelastomer (A)] und mindestens ein thermoplastisches teilkristallines Vinylidenfluorid-Polymer [Polymer (F)] mit einer gewichtsmittleren Teilchengröße (D50) gemäß der in der Beschreibung angegebenen Methode unter 500 µm umfasst;
b) mindestens ein nichtwässriges Lösungsmittel (S), das aus der Gruppe bestehend aus nitrilhaltigen Lösungsmitteln, Ethern, Estern, Thiolen und Thioethern, Ketonen, tertiären Aminen und cyclischen Carbonatestern ausgewählt ist.

2. Bindemittel (B) nach Anspruch 1, wobei es sich bei dem Fluorelastomer (A) um ein Copolymer auf Basis von Vinylidenfluorid (VDF) handelt, in dem VDF mit mindestens einem Comonomer copolymerisiert ist, das aus der Gruppe bestehend aus den folgenden Klassen ausgewählt ist:
(a) C₂-C₈-Perfluorolefinen, wie Tetrafluorethylen (TFE), Hexafluorpropylen (HFP), Hexafluorisobutylen;
(b) wasserstoffhaltigen C₂-C₈-Olefinen, wie Vinylfluorid (VF), Trifluorethylen (TrFE), Perfluoralkylethylenen der Formel CH₂ = CH-R_{f}, wobei R_{f} für eine C₁-C₆-Perfluoralkylgruppe steht;
(c) C₂-C₈-Chlor- und/oder -Brom- und/oder - Iodfluorolefinen wie Chlortrifluorethylen (CTFE);
(d) (Per) fluoralkylvinylethern (PAVE) der Formel CF₂ = CFOR_{f}, wobei R_{f} für eine C₁-C₆-(Per) fluoralkylgruppe, z. B. CF₃, C₂F₅, C₃F₇, steht;
(e) (Per)fluoroxyalkylvinylethern der Formel CF₂ = CFOX, wobei X für ein C₁-C₁₂-((Per) fluor) oxyalkyl mit kettenständigen Sauerstoffatomen, z. B. die Perfluor-2-propoxypropylgruppe, steht;
(f) (Per)fluordioxolen der Formel: 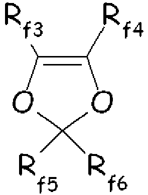 wobei R_{f3}, R_{f4}, R_{f5}, R_{f6} gleich oder voneinander verschieden sind und unabhängig aus Fluoratomen und C₁-C₆-(Per)fluoralkylgruppen, die gegebenenfalls ein oder mehrere Sauerstoffatome enthalten, wie insbesondere -CF₃, -C₂F₅, -C₃F₇, -OCF₃, -OCF₂CF₂OCF₃, ausgewählt sind; vorzugsweise Perfluordioxolen;
(g) (Per) fluormethoxyvinylether (im Folgenden MOVE) der Formel:
CFX₂ = CX₂OCF₂OR"_{f}
wobei R"_{f} aus linearen oder verzweigten C₁-C₆(Per)fluoralkylgruppen; cyclischen C₅-C₆-(Per)fluoralkylgruppen und linearen oder verzweigten C₂-C₆-(Per)dluoroxyalkylgruppen mit 1 bis 3 kettenständigen Sauerstoffatomen ausgewählt ist und X₂ = F, H; vorzugsweise X₂ für F steht und R"_{f} für -CF₂CF₃ (MOVE1); -CF₂CF₂OCF₃ (MOVE2) oder -CF₃ (MOVE3) steht;
(h) nichtfluorierten C₂-C₈-Olefinen (ol), beispielsweise Ethylen und Propylen.

3. Bindemittel (B) nach einem der Ansprüche 1 oder 2, wobei das Polymer (F) aus VDF-Homopolymeren und Copolymeren von VDF mit einem oder mehreren fluorierten Monomeren und/oder hydrierten Monomeren ausgewählt ist.

4. Bindemittel (B) nach einem der vorhergehenden Ansprüche, wobei das Polymer (F) Folgendes umfasst und weiter bevorzugt daraus besteht:
(I) Wiederholungseinheiten, die sich von VDF ableiten, und
(II) Wiederholungseinheiten, die sich von mindestens einem hydrierten Monomer mit mindestens einer Carbonsäure-Endgruppe [Monomer (MA)] ableiten.

5. Bindemittel (B) nach einem der vorhergehenden Ansprüche, wobei die Menge an Polymer (F) in der Zusammensetzung zwischen 2 Gew.-% und 50 Gew.-%, weiter bevorzugt zwischen 2 Gew.-% und 20 Gew.-% und noch weiter bevorzugt zwischen 2 Gew.-% und 15 Gew.-%, bezogen auf das Gesamtgewicht des (Per)fluorelastomers (A) und des Polymers (F) umfasst.

6. Mikronisierte Pellets einer Zusammensetzung (E), die mindestens ein (Per)fluorelastomer [Fluorelastomer (A)] und mindestens ein thermoplastisches Vinylidenfluorid-Polymer [Polymer (F)] umfassen,
wobei Polymer (F) in der Zusammensetzung (E) in einer Menge von mindestens 2 Gew.-% und weniger als 5 Gew.-%, bezogen auf das Gesamtgewicht des (Per)fluorelastomers (A) und des Polymers (F), vorliegt.

7. Elektrodenbildende Zusammensetzung [Zusammensetzung (C)] zur Verwendung bei der Herstellung von Elektroden für elektrochemische Vorrichtungen, **dadurch gekennzeichnet, dass** sie Folgendes umfasst:
a) mindestens ein Elektrodenaktivmaterial (AM);
b) ein Bindemittel (B) nach einem der Ansprüche 1 bis 5; und
c) gegebenenfalls mindestens ein leitendes Mittel.

8. Elektrodenbildende Zusammensetzung (C) nach Anspruch 7, die ferner Folgendes umfasst:
d) mindestens einen Festelektrolyten auf Sulfidbasis.

9. Verfahren zur Herstellung einer Elektrode für eine Sekundärbatterie, umfassend die Schritte:
A) Bereitstellen einer elektrodenbildenden Zusammensetzung (C) nach Anspruch 7 oder 8;
B) Bereitstellen eines Metallsubstrats mit mindestens einer Oberfläche;
C) Aufbringen der in Schritt A) bereitgestellten elektrodenbildenden Zusammensetzung (C) auf die mindestens eine Oberfläche des in Schritt B) bereitgestellten Metallsubstrats, wodurch eine Anordnung bereitgestellt wird, die ein Metallsubstrat umfasst, das auf die mindestens eine Oberfläche mit der Zusammensetzung (C) beschichtet ist;
D) Trocknen der in Schritt C) bereitgestellten Anordnung.

10. Elektrode für eine Sekundärbatterie, erhältlich durch das Verfahren nach Anspruch 9.

11. Zusammensetzung (CC), die zur Herstellung eines Verbundfestelektrolytfilms geeignet ist, wobei die Zusammensetzung Folgendes umfasst:
i) mindestens einen Festelektrolyten auf Sulfidbasis;
ii) ein Bindemittel (B) nach einem der Ansprüche 1 bis 5.

12. Zusammensetzung (CC) nach Anspruch 11, wobei der Festelektrolyt auf Sulfidbasis aus der Gruppe ausgewählt ist, die aus Folgendem besteht:
- Lithiumzinnphosphorsulfid("LSPS")-Materialien, wie Li₁₀SnP₂S₁₂;
- Lithiumphosphorsulfid("LPS")-Materialien, wie Gläsern, kristallinen Keramiken oder Glaskeramiken von denjenigen der Formel (Li₂S)ₓ-(P₂S₅)_{y}, wobei x+y=1 und 0≤x≤1, Li₇P₃S₁₁, Li₇PS₆, Li₄P₂S₆, Li_{9.6}P₃S₁₂ und Li₃PS₄;
- dotiertem LPS, wie Li₂CuPS₄, Li Li₁₊₂ₓZn₁₋ₓPS₄, wobei 0≤x≤1, Li_{3,33}Mg_{0,33}P₂S₆ und Li₄₋₃ₓScₓP₂S₆, wobei 0≤x≤1;
- Lithiumphosphorsulfidsauerstoff("LPSO")-Materialien der Formel LixPySzO, wobei 0,33≤x≤0,67, 0,07≤y≤0,2, 0,4≤z≤0,55, 0≤w≤0,15;
- Lithiumphosphorsulfid-Materialien enthaltend X ("LXPS"), wobei X für Si, Ge, Sn, As, Al steht, wie Li₁₀GeP₂S₁₂ und Li₁₀SiP₂S₁₂;
- Lithiumphosphorsulfidsauerstoff enthaltend X ("LXPSO"), wobei X für Si, Ge, Sn, As, Al steht;
- Lithiumsiliciumsulfid("LSS")-Materialien;
- Lithiumborsulfidmaterialien, wie Li₃BS₃ und Li₂S-B₂S₃-LiI;
- Lithiumzinnsulfidmaterialien und Lithiumarsenidmaterialien, wie Li_{0.8}Sn_{0.8}S₂, Li₄SnS₄, Li_{3.833}Sn_{0.833}As_{0.166}S₄, Li₃AsS₄-Li₄SnS₄, Ge-substituiertem Li₃AsS₄; und
- Sulfidmaterialien vom Argyrodit-Typ der allgemeinen Formel Li₇₋ₓPS₆₋ₓXₓ,
wobei:
- Y für mindestens ein Halogenelement steht, das aus der Gruppe Cl, Br und I oder einer Kombination davon ausgewählt ist; und x für eine positive Zahl von 0,8 bis 2,0 steht.

13. Verfahren zur Herstellung eines Verbundfestelektrolytfilms für Festkörperbatterien, umfassend die Schritte:
I) Verarbeiten der Zusammensetzung (CC) nach Anspruch 11 oder 12 zur Bildung eines nassen Films eines festen Verbundelektrolyts; und
II) Trocknen des in Schritt (I) bereitgestellten nassen Films.

14. Verbundfestelektrolytfilm für Festkörperbatterien, erhältlich durch das Verfahren nach Anspruch 13.

15. Festkörperbatterie, umfassend einen Verbundfestelektrolytfilm nach Anspruch 14 und/oder mindestens eine Elektrode nach Anspruch 10.

## Revendications

1. Composition de liant [liant (B)] pour une utilisation dans la préparation de composants pour dispositifs électrochimiques, **caractérisée en ce qu'**elle comprend :
a) des pastilles micronisées d'une composition de (per) fluoroélastomère [composition (E)], dans laquelle la composition (E) comprend au moins un (per)fluoroélastomère [fluoroélastomère (A)] et au moins un polymère thermoplastique semi-cristallin de fluorure de vinylidène [polymère (F)] ayant une taille moyenne en poids de particules (D50), selon le procédé rapporté dans la description, inférieure à 500 µm ;
b) au moins un solvant non aqueux (S) choisi dans le groupe constitué par les solvants contenant nitrile, les éthers, les esters, les thiols et thioéthers, les cétones, les amines tertiaires et les esters de carbonate cyclique.

2. Liant (B) selon la revendication 1, dans lequel le fluoroélastomère (A) est un copolymère à base de fluorure de vinylidène (VDF), dans lequel le VDF est copolymérisé avec au moins un comonomère choisi dans le groupe constitué par les classes suivantes :
(a) C₂-C₈ perfluorooléfines, telles que tétrafluoroéthylène (TFE), hexafluoropropylène (HFP), hexafluoroisobutylène ;
(b) C₂-C₈ oléfines contenant hydrogène, telles que fluorure de vinyle (VF), trifluoroéthylène (TrFE), perfluoroalkyléthylènes de formule CH₂ = CH-R_{f}, R_{f} étant un groupe C₁-C₆ perfluoroalkyle ;
(c) C₂-C₈ chloro et/ou bromo et/ou iodo-fluorooléfines telles que chlorotrifluoroéthylène (CTFE) ;
(d) (per) fluoroalkylvinyléthers (PAVE) de formule CF₂ = CFOR_{f}, R_{f} étant un groupe C₁-C₆ (per) fluoroalkyle, par exemple CF₃, C₂F₅, C₃F₇ ;
(e) (per) fluoro-oxy-alkylvinyléthers de formule CF₂ = CFOX, X étant un C₁-C₁₂ ((per)fluoro)-oxyalkyle comprenant des atomes d'oxygène caténaires, par exemple le groupe perfluoro-2-propoxypropyle ;
(f) (per)fluorodioxoles ayant la formule : 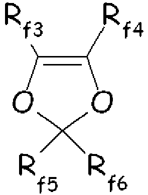 R_{f3}, R_{f4}, R_{f5}, R_{f6}, égaux ou différents les uns des autres, étant indépendamment choisis parmi des atomes de fluor et des groupes C₁-C₆ (per) fluoroalkyle, éventuellement comprenant un ou plus d'un atome d'oxygène, tels que notamment -CF₃, -C₂F₅, -C₃F₇, -OCF₃, -OCF₂CF₂OCF₃ ; préférablement, perfluorodioxoles ;
(g) (per)fluoro-méthoxy-vinyléthers (MOVE, ci-après) ayant la formule :
CFX₂ = CX₂OCF₂OR"_{f}
R"_{f} étant choisi parmi des C₁-C₆ (per)fluoroalkyles, linéaires ou ramifiés ; C₅-C₆ (per)fluoroalkyles cycliques ; et C₂-C₆ (per)fluorooxyalkyles, linéaires ou ramifiés, comprenant de 1 à 3 atomes d'oxygène caténaires, et X₂ = F, H ; préférablement X₂ étant F et R"_{f} étant -CF₂CF₃ (MOVE1) ; -CF₂CF₂OCF₃ (MOVE2) ; ou -CF₃ (MOVE3) ;
(h) C₂-C₈ oléfines non fluorées (Ol), par exemple éthylène et propylène.

3. Liant (B) selon l'une quelconque des revendications 1 ou 2, dans lequel le polymère (F) est choisi parmi les homopolymères de VDF et les copolymères de VDF avec un ou plusieurs monomères fluorés et/ou monomères hydrogénés.

4. Liant (B) selon l'une quelconque des revendications précédentes, dans lequel le polymère (F) comprend, plus préférablement est constitué par :
(I) des motifs répétitifs issus de VDF et
(II) des motifs répétitifs issus d'au moins un monomère hydrogéné comprenant au moins un groupe terminal acide carboxylique [monomère (MA)].

5. Liant (B) selon l'une quelconque des revendications précédentes, dans lequel la quantité de polymère (F) dans la composition est comprise entre 2 % en poids et 50 % en poids, plus préférablement entre 2 % en poids et 20 % en poids et encore plus préférablement entre 2 % en poids et 15 % en poids par rapport au poids total du (per)fluoroélastomère (A) et du polymère (F).

6. Pastilles micronisées d'une composition (E) comprenant au moins un (per)fluoroélastomère [fluoroélastomère (A)] et au moins un polymère thermoplastique de fluorure de vinylidène [polymère (F)], dans lesquelles le polymère (F) dans la composition (E) est présent en une quantité d'au moins 2 % et inférieure à 5 % en poids par rapport au poids total du (per)fluoroélastomère (A) et du polymère (F).

7. Composition de formation d'électrode [composition (C)] pour une utilisation dans la préparation d'électrodes pour dispositifs électrochimiques, **caractérisée en ce qu'**elle comprend :
a) au moins un matériau actif d'électrode (AM) ;
b) un liant (B) selon l'une quelconque des revendications 1 à 5 ; et
c) éventuellement, au moins un agent conducteur.

8. Composition de formation d'électrode (C) selon la revendication 7, qui comprend en outre
d) au moins un électrolyte solide à base de sulfure.

9. Procédé de fabrication d'une électrode pour une batterie secondaire comprenant les étapes de :
A) fourniture d'une composition de formation d'électrode (C) selon l'une quelconque des revendications 7 ou 8 ;
B) fourniture d'un substrat métallique ayant au moins une surface ;
C) application de la composition de formation d'électrode (C) fournie à l'étape A) sur l'au moins une surface du substrat métallique fourni à l'étape B), fournissant ainsi un ensemble comprenant un substrat métallique revêtu par ladite composition (C) sur l'au moins une surface ;
D) séchage de l'ensemble fourni à l'étape C).

10. Électrode pour une batterie secondaire pouvant être obtenue par le procédé selon la revendication 9.

11. Composition (CC) qui est appropriée pour préparer un film d'électrolyte solide composite, ladite composition comprenant :
i) au moins un électrolyte solide à base de sulfure ;
ii) un liant (B) selon l'une quelconque des revendications 1 à 5.

12. Composition (CC) selon la revendication 11, dans laquelle l'électrolyte solide à base de sulfure est choisi dans le groupe constitué par :
- des matériaux au sulfure de lithium et d'étain et de phosphore (« LSPS »), tels que Li₁₀SnP₂S₁₂ ;
- des matériaux au sulfure de lithium et de phosphore (« LPS »), tels que verres, céramiques cristallines ou vitrocéramiques de ceux de formule (Li₂S)ₓ-(P₂S₅)_{y}, dans laquelle x + y = 1 et 0 ≤ x ≤ 1, Li₇P₃S₁₁, Li₇PS₆, Li₄P₂S₆, Li_{9,6}P₃S₁₂ et Li₃PS₄ ;
- LPS dopé, tel que Li₂CuPS₄, Li Li_{1 + 2x}Zn₁₋ₓPS₄, dans laquelle 0 ≤ x ≤ 1, Li_{3,33}Mg_{0,33}P₂S₆, et Li₄₋₃ₓScₓP₂S₆, dans laquelle 0 ≤ x ≤ 1 ;
- des matériaux à base d'oxygène, de sulfure, de phosphore et de lithium (« LPSO ») de formule LixPySzO, où 0,33 ≤ x ≤ 0,67, 0,07 ≤ y ≤ 0,2, 0,4 ≤ z ≤ 0,55, 0 ≤ w ≤ 0, 15 ;
- des matériaux de sulfure de phosphore et de lithium comprenant X (« LXPS »), X étant Si, Ge, Sn, As, Al, tels que Li₁₀GeP₂S₁₂ et Li₁₀SiP₂S₁₂ ;
- oxygène sulfure phosphore lithium comprenant X (« LXPSO »), X étant Si, Ge, Sn, As, Al ;
- des matériaux de sulfure de silicium et de lithium (« LSS ») ;
- des matériaux de sulfure de borate de lithium, tels que Li₃BS₃ et Li₂S- B₂S₃-LiI ;
- des matériaux de sulfure d'étain et de lithium et des matériaux d'arséniure de lithium, tels que Li_{0,8}Sn_{0,8}S₂, Li₄SnS₄, Li_{3,833}Sn_{0,833}As_{0,166}S₄, Li₃AsS₄- Li₄SnS₄, Li₃AsS₄ substitué par Ge ; et
- des matériaux de sulfure de type argyrodite de formule générale Li₇₋ₓPS₆₋ₓXₓ
- Y représentant au moins un élément halogène choisi dans le groupe Cl, Br et I ou une combinaison de ceux-ci ; et x représentant un nombre positif de 0,8 à 2,0.

13. Procédé de fabrication d'un film d'électrolyte solide composite pour batteries à l'état solide comprenant les étapes de :
I) traitement de la composition (CC) selon l'une quelconque des revendications 11 ou 12 pour former un film humide d'un électrolyte composite solide ; et
II) séchage du film humide fourni à l'étape (I).

14. Film d'électrolyte solide composite pour batteries à l'état solide pouvant être obtenu par le procédé selon la revendication 13.

15. Batterie à l'état solide comprenant un film d'électrolyte solide composite selon la revendication 14 et/ou au moins une électrode selon la revendication 10.
